# EUROPÄISCHE PATENTSCHRIFT

(11) **EP 1 011 035 B1**
(45) Veröffentlichungstag und Bekanntmachung des Hinweises auf die Patenterteilung: **29.03.2006**
(21) Anmeldenummer: 99123763.7
(22) Anmeldetag: 30.11.1999
(51) Int. Cl.: G05B 19/4067

(54) **Verfahren zum Behandeln des Spannungsabfalls in der Steuerung eines Roboters und zum Wiederanfahren eines Roboters nach Spannungsabfall**
Method for managing a voltage drop in the controller of a robot and for restarting a robot after a voltage drop
Méthode de gestion de chute de tension du contrôleur d'un robot et de redémarrage d'un robot après une chute de tension

(30) Priorität: 12.12.1998 DE 19857436
(43) Veröffentlichungstag der Anmeldung: 21.06.2000
(73) Patentinhaber: KUKA Roboter GmbH, 86165 Augsburg (DE)
(72) Erfinder: Grob, Franz, 86156 Augsburg (DE); Spiess, Carsten, 86152 Augsburg (DE); Sturm, Stefan, 86687 Kaisheim (DE)
(74) Vertreter: Lempert, Jost

(56) Entgegenhaltungen:
- EP-A- 0 471 860
- EP-A- 0 805 386
- WO-A-98/37466
- WO-A-98/51456
- DE-A- 19 614 201
- SCHNEIDER G: "FEUERPROBE BESTANDEN. PC-TECHNOLOGIE IN DER ROBOTER- STEUERUNGSTECHNIK ERFORGREICH EINGEFUEHRT" , ELEKTRONIK, FRANZIS VERLAG GMBH. MUNCHEN, DE, VOL. 47, NR. 8, PAGE(S) 82,84,86-88 XP000780193 ISSN: 0013-5658 * Seite 86, Spalte 1, Zeile 1 - Spalte 2, Zeile 10 *

## Beschreibung

Die Erfindung betrifft ein Verfahren zur Behandlung des Spannungsabfalls zumindest im Steuerteil, bei einem Roboter mit einer PC-Steuerung aus einer Kombination eines Echtzeit-Betriebssystems zum zeitkritischen Steuern und Regeln der Roboterbewegung und allerdings lediglich eines zeitlich begrenzten Standard- PC-Betriebssystems zur Kommunikation mit einem Bediener, wobei bei Spannungsabfall ein Batterie-/Akku-Betrieb erfolgt.

Die Erfindung betrifft weiterhin ein Verfahren zum Wiederanfahren eines Roboters nach einem Stillsetzen des Roboters aufgrund eines Spannungsabfalls.

Bei Spannungsab- oder -ausfall ist es bekannt (siehe z.B. EP0471860A1) durch Pufferung elektrischer Energie über einen Akku oder eine Batterie ein Programm kontrolliert zu beenden und ggf. auch eine durch das Programm gesteuerte Mechanik, wie die eines Roboters durch Nutzung gespeicherter Zwischen energie kontrolliert stillzusetzen. Nach Rückkehr der Spannung muß aber die durch einen Rechner realiesierte Steuerung neu gestartet werden; sie führt einen sogenannten Kaltstart aus, bei dem sie sich nach Beendigung des Startvorganges im Ausgangszustand wie bei einen völligen Neustart befindet. Damit ein Roboter eine Programmausführung und seine Arbeit fortsetzen kann, muß er in der Regel zunächst von Hand aus dem Bauteil, welches er bearbeitet hat, herausgefahren werden. Sein Arbeitsprogramm muß neu angewählt und bis zur Unterbrechungsstelle gefahren werden, um von dort nach Wiederherstellung des entsprechenden Zustandes fortgesetzt werden zu können. Dieses Verfahren erfordert einen erfahrenen Bediener, es ist fehleranfällig und nimmt unter Umständen sehr viel Zeit in Anspruch. Wird dann sogleich ein neues Werkstück bearbeitet, so ist das nicht zu Ende bearbeitete Werkstück Ausschuß und damit ebenfalls ein Kostenfaktor.

Insbesondere bei einer PC-basierten Steuerung wie die Kuka kR C1 (siehe Artikel : Schneider G, Feuerprobe bestanden, Elektronik, Franzis Verlag GmbH, Vol. 47, Nr. 8, Seiten 82, 84, 86-88, kann die Hardware und damit der Zustand des Arbeitsspeichers nur eine begrenzte Zeit durch Akku-/Batteriepufferung bei Spannungsausfall zwischen gespeichert werden, so daß eine weitgehende automatische Wiederherstellung des gespeicherten Steuerungszustandes nach Spannungswiederkehr und Spannungshochlauf nur innerhalb einer begrenzten Zeit, nicht aber bei einer längeren Spannungsunterbrechung möglich ist. Da zum Starten eines herkömmlichen Personalcomputers die Durchführung einer Reihe von Prozessen des Betriebssystems erforderlich ist, kann dessen Status im Abbruchzustand nicht ohne weiteres in den Arbeitsspeicher übernommen werden.

Der Erfindung liegt die Aufgabe zugrunde, ein Verfahren zu schaffen, durch welches ein Anlagenstillstand zeitlich minimiert und ein Ausschuß aufgrund einer Prozeßunterbrechung möglichst vermieden wird.

Zur Lösung der genannten Aufgabe sieht die Erfindung zunächst bei einem Verfahren der eingangs genannten Art vor, daß eine laufende Roboterbewegung und ggf. Anwendungsarbeiten beendet oder definiert abgebrochen werden, daß anschließend Arbeitsprozesse der Steuerung abgeschlossen werden und daß ausschließlich den Echtbetriebszeitsystem sowie Robotersteuerungsprogramme betreffende Inhalte des Arbeitsspeichers zum Beendigungszeitpunkt auf einem Massenspeicher gespeichert werden.

Beenden bzw. kontrolliert Abbrechen der Roboterbewegung etc. heißt hier, daß nicht der Arbeitsvorgang als solcher zu Ende geführt wird, sondern der Arbeitsvorgang abgebrochen wird, die Bewegung als solche beendet wird und der Roboter zum Stillstand geführt wird, allerdings in kontrollierter und damit gesteuerter Weise, so daß keine Gefahren oder Beschädigungen auftreten.

Hierdurch wird erreicht, daß die wesentlichen, bei Beendigung aufgrund eines Spannungsabfalls im Arbeitsspeicher bei Beendigung befindlichen Informationen über den Status des Roboters zu diesem Zeitpunkt in sicherer Weise gespeichert werden, so daß sie unabhängig von elektrischer Energiezufügung beliebig lange zur Verfügung stehen.

Auf dieser Grundlage sieht die Erfindung weiterhin ein Verfahren zum Wiederanfahren eines derart stillgelegten Roboters vor, bei dem das Standard-PC-Betriebssystem in üblicher Weise in den Arbeitsspeicher geladen und gestartet wird und die den Zustand des Echtzeit-Betriebssystem-Zusatzes sowie der Roboterprogramme im Beendigungszustand betreffenden Inhalte von den/dem Massenspeicher(n) in den Arbeitsspeicher übernommen und Steuerung des Roboters im Beendigungszustand wieder aufgenommen wird.

Durch die Erfindung wird erreicht, daß der Roboter als Einzelanlage oder in Zellen oder einem größeren Verbund integriert, nach Spannungswiederkehr automatisch oder unter Bedienerkontrolle nahtlos an der unterbrochenen Programmausführung fortfahren kann.

In bevorzugter Ausgestaltung ist dabei vorgesehen, daß die das Echtzeit-Betriebssystem sowie Robotersteuerungsprogramme betreffenden Inhalte des Arbeitsspeichers als Bild (Image) auf dem/den Massenspeicher(n) gespeichert werden und daß ein den Zustand des Echtzeit-Betriebssystems sowie der Roboterprogramme enthaltendes Bild (Image) von dem/den Massenspeicher(n) in den Arbeitsspeicher übernommen wird. Eine Weiterbildung sieht vor, daß beim Wiederanfahren auch die Steuerung sonstiger Prozeßperipherie im Beendigungszustand wieder aufgenommen wird, so daß der gesamte Prozeß sogleich am Abbruchspunkt fortgesetzt werden kann.

Erfindungsgemäß also wird lediglich der das Echtzeit-Betriebssystem betreffende bzw. beinhaltende Arbeitsspeicherinhalt mit eingebundenen Roboterprogrammen z.B. VxWorks auf dem bzw. den Massenspeicher(n) zwischengespeichert, nicht aber das Standard- PC-Betriebssystem, wie z.B. Windows 95, 98 oder Windows NT. Beim Wiederanlauf wird das Standard-Betriebssystem in üblicher Weise neu gestartet und die Rechner-Hardware vollständig neu initialisiert. Anschließend wird das gesicherte Image des Echtzeits-Betriebssystems, insbesondere der Roboterprogramme von dem Massenspeicher in den Arbeitsspeicher zurückgeladen, so daß die Steuerung des Roboters an der Unterbrechungsstelle nahtlos fortgesetzt werden kann. Externe Kommunikationsschnittstellen zu industriellen Arbeitsprozessen, wie denen von weiteren Werkzeugen, insbesondere Schweiß- oder Klebeeinrichtung etc. werden wieder in den Zustand vor der Unterbrechung gesetzt werden. Dabei ermöglicht das erfindungsgemäße Verfahren die Verwendung von standardisierter PC Hardware, insbesondere mit dynamischem Arbeitsspeicher (DRAM) zur Steuerung von Robotern und damit geringen Kosten auch hinsichtlich der einzusetzenden Software.

In bevorzugter Ausgestaltung des erfindungsgemäßen Verfahrens ist vorgesehen, daß bei Spannungsabfall die Roboterbewegung bahnnah abgebremst ist, wobei dies beinhaltet, daß die Steuerung und Regelung des Roboters solange aktiv bleibt, bis die gespeicherte Antriebsenergie verbraucht ist. Hierbei handelt es sich insbesondere um im Gleichspannungszwischenkreis der Servoumrichter (Kondensatorbatterie) gespeicherten elektrischen Energie sowie ggf. beim Abbremsen in diesen rückgespeicherte kinetische Energie.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung einzeln erläutert ist.

Dabei zeigt:

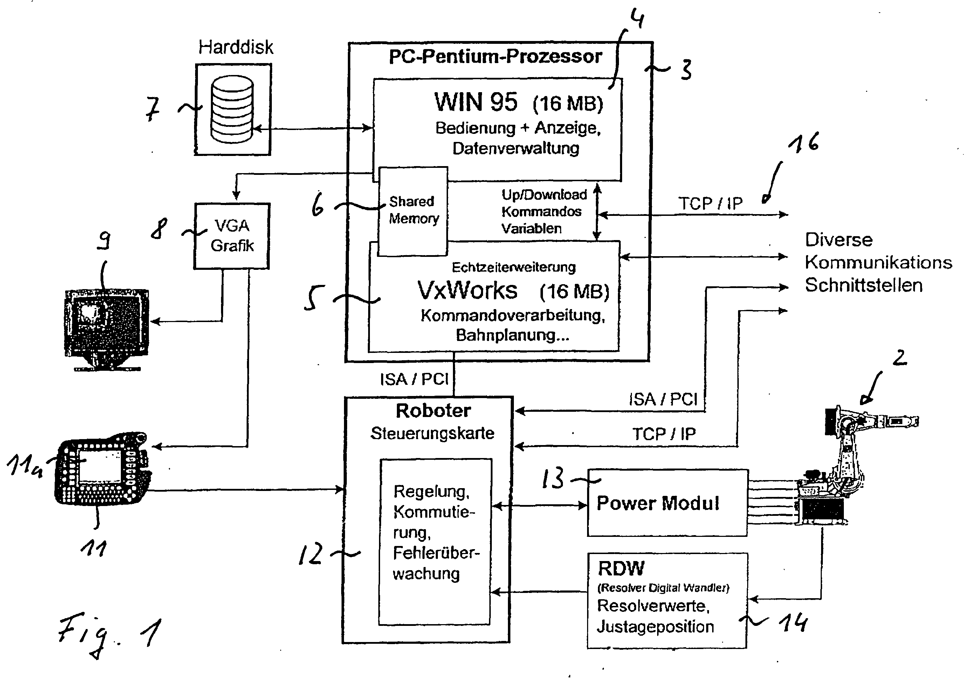

- Figur 1:: eine schematische Darstellung der der Erfindung zugrunde liegenden Robotersteuerung;
- Figur 2:: ein Ablaufdiagramm zum erfindungsgemäßen Verfahren zum Steuern eines Roboters bei Spannungsabfall;
- Figur 3:: ein Ablaufdiagramm des erfindungsgemäßen Verfahrens zum Wiederanfahren des Roboters nach Spannungsabfall;
- Figur 4:: ein Ablaufdiagramm zur Sicherung des Zustandes des Speicherinhaltes bei Beendigung des Arbeitsablaufs nach Spannungsabfall und zur Wiederaufnahme des Arbeitens nach Spannungswiederkehr.

Im dargestellten Ausführungsbeispiel basiert die Steuerung 1 für einen Roboter 2 auf einem PC-Computer mit einer PC-Hauptplatine 3 mit mindestens einem PC-Pentium-Prozessor, auf dem sowohl ein nichtechtzeitfähiges Standard-PC-Betriebssystem 4 wie Windows 95 oder 98, als auch ein Echtzeit-Betriebpsystem wie VxWorks, gemeinsam arbeiten. Das Standard-PC-Betriebssystem 4 und die Echtzeit-Betriebssystem 5 nutzen gemeinsam den Arbeitsspeicher 6. Mit der Hauptplatine 3 ist ein Massenspeicher 7 verbunden.

Das Standard-Betriebssystem 4 dient insbesondere zur Kommunikation mit einem Bediener sowie mit Massenspeicher-Medien. Hierzu ist es mit mehreren Bediener-Peripheriegeräten verbunden sowie über eine Grafikkarte 8 mit einem Monitor 9 und mit der Anzeige 11a einer Steuereinheit 11, ie wiederum mit einer mit dem Echtzeit-Betriebssystem 5 verbundenen Robotersteuerkarte 12 kommuniziert. Die Robotersteuerkarte 12 steuert über ein Leistungsmodul 13 den Roboter 2, dessen mittels Bewegungs- und Positionsmessern etc. gemessenen Positionen und Bewegungsdaten über eine Wandlereinheit 14 der Robotersteuerkarte 12 mitgeteilt werden. Insbesondere die Robotersteuerkarte 12 und das Echtzeit-Betriebssystem 5 stehen über diverse Kommunikations-Meßstellen 16 mit Industrieperipherie, Wegsteuerungen für Werkzeuge, insbesondere Kleb- und Schweißeinrichtungen etc. in Verbindung.

Die Erfindung sieht nun bei einer solchen Steuerung ein Steuermodul vor, mit dem der Ablauf der Steuerung sowie der Roboter im Falle eines Spannungsabfalles behandelt bzw. gesteuert wird.

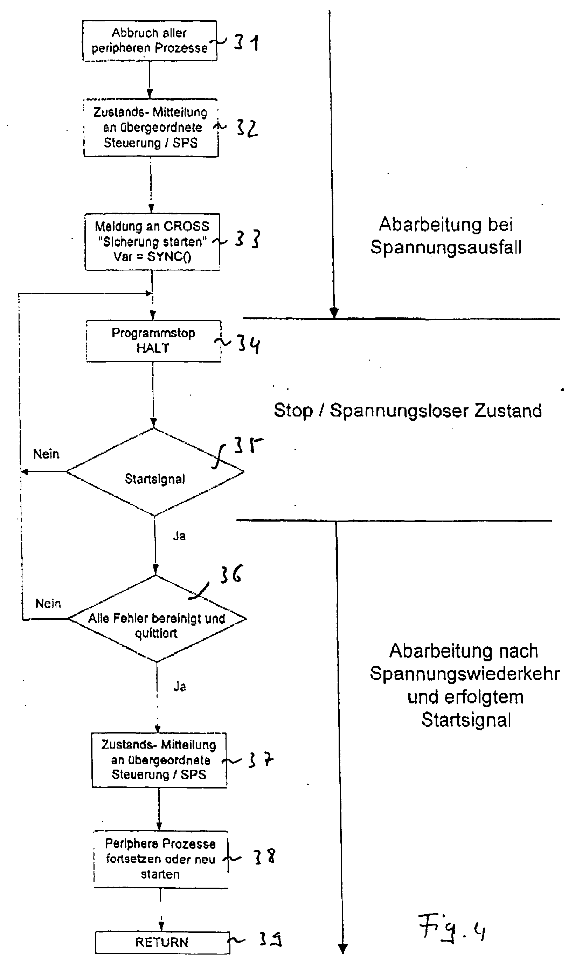

Das nicht dargestellte Netzteil der Steuerung 1 weist einen ebenfalls nicht dargestellten Spannungsdetektor auf. Über diesen stellt das Betriebssystem in einem ersten Schritt 21 einen eventuellen Spannungsabfall fest, den es in einem Schritt 22 dem Steuermodul meldet. Dieses initialisiert im Schritt 23 ein Programm (Figur 4), welches in einem weiteren Schritt 31, sowohl über die Peripherie-Kommunikationsschnittstellen 16 gesteuerten Arbeitsprozesse abbricht.

Weiter wird der Roboter 2 bahnnah abgebremst, d.h. entsprechend der vorgegebenen Bahn in einen Ruhezustand überführt, bis die noch vorhandene Antriebsenergie verbraucht ist. Hierbei kann es sich um in dem Gleichspannungszwischenkreis der Servoumrichter (Kondensatorbatterie) des Roboters gespeicherte Energie sowie ggf. kinetische Energie der Roboterelemente und die hierdurch bei Abbremsen in Bewegung befindliche Achsen resultierende und in den Zwischenkreis rückgespeiste Energie handeln. An Umkehrpunkten sowie bei Aufwärtsbewegungen ist der Stillstand der Roboterachsen schnell zu erreichen, im letzteren Fall trägt hierzu die Gravitationskraft wesentlich bei. Längere Bremszeiten sind bei hohen Geschwindigkeiten mit großer Trägheit erforderlich.

Nach kontrolliertem Abbruch aller externen bzw. mechanischen Prozesse insbesondere der Roboterbewegungen erfolgt eine Zustandsmitteilung an externen Steuerungen (Schritt 32), woraufhin in einem Schritt 33 eine entsprechende Meldung an das Steuerungsmodul erfolgt, welches im Schritt 24 die Roboterprogramme (in ihrem dann gegebenen Zustand) auf den Massenspeicher 7 sichert. Im Schritt 25 geht das Echtzeit-Betriebssystem nach kontrolliertem Abbruch aller Prozesse und insbesondere der Roboterbewegung in einen definierten Zustand über und sichert anschließend das komplette Echtzeit-Betriebssystem (Schritt 26 bzw. 26'), mit einer Spannungsabfall-Information (Schritt 27 bzw. 27'), die bei einem Neustart bewirkt, daß dieser einen "Warmstart" imitiert, bei dem das Echtzeit-Betriebssystem und die Roboterprogramme mit allen gespeicherten Zuständen vom Massenspeicher 7 übernommen werden und die Steuerung von diesem Zustand weitergeführt wird.

Anschließend schaltet das Steuerungsmodul im Schritt 28 die Spannungsversorgung des bis hierher sichernden Akku bzw. eine entsprechende Batterie ab.

Ergibt sich während des vorstehend beschriebenen Abbruchs der Roboterbewegung, der Peripheriearbeiten sowie während des Herunterfahrens des Systems ein Fehler, so wird dieser Fehlerzustand zwar auch auf dem Massenspeicher 7 zwecks Ermöglichung einer Analyse gespeichert; die Spannungsausfall-Information ist aber eine solche, daß der nächste Start des Systems ein "Kaltstart" ist, bei dem von Standarddaten ausgegangen wird, da ein Weiterarbeiten bei einem solchen Fehlerzustand nicht sinnvoll ist.

Bei erneuter Spannungsversorgung wird in der Steuerung 1 wie üblich, das nicht-echtzeitfähige Standard-PC-Betriebssystem (Windows 95) gestartet (Schritt 41), das mit Schritt 42 das Steuerungsmodul aufruft. Dieses betrifft die beim beendenden Schritt 27 abgelegte Spannungsausfall-Information und führt ggf. den zur Weiterverführung der Robotertätigkeit am erreichten Arbeitspunkt erforderlichen "Warmstart", d.h. einen Wiederanlauf des Systems mit den gesicherten Daten durch (Schritte 43, 44 bzw. 44').

Im folgenden (Schritt 45) erfolgt die Restaurierung des Steuerungszustandes bei Spannungsausfall. Hierzu wird das Echtzeit-Betriebssystem 5 mit den Roboterprogrammen vom Massenspeicher 7 gelesen und im Arbeitsspeicher 6 (Schritt 46-48) restauriert. Anschließend wird auch für das Ausgangsabbild der peripheren Systeme im Zustand des Abbruchs wieder hergestellt (Schritt 49).

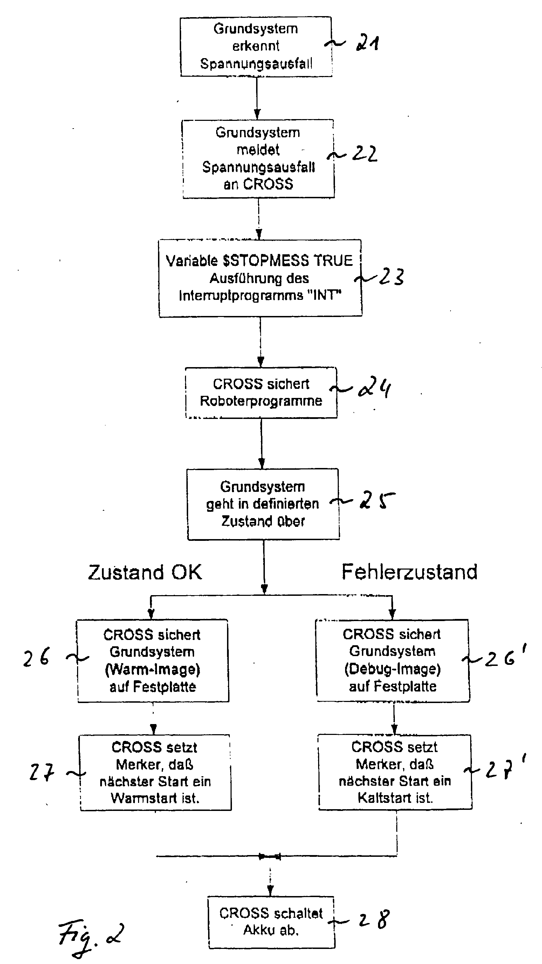

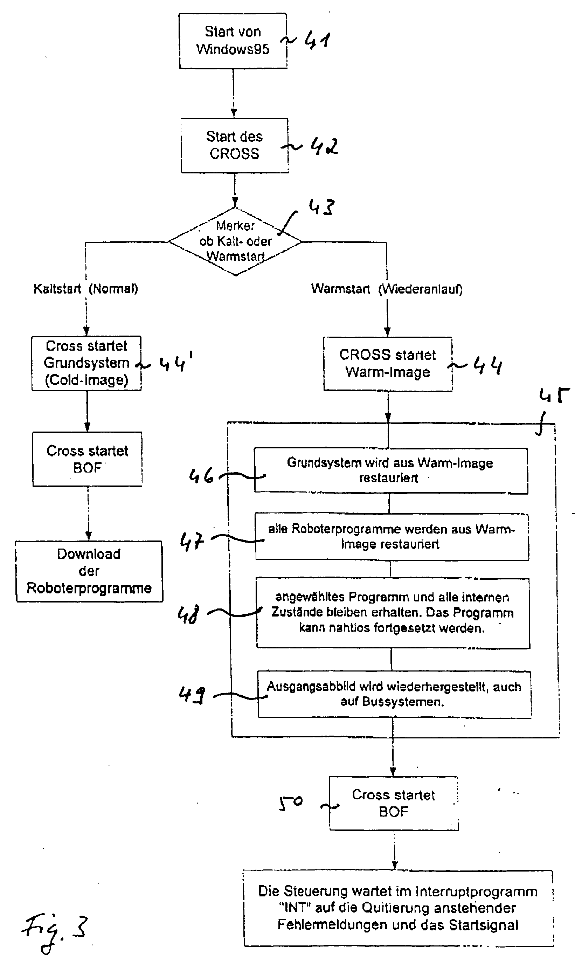

Nach Wiederherstellung der Daten im Arbeitsspeicher 6 werden die Bedieneroberfläche und insbesondere auch die Anzeigegeräte 9, 11 wieder in den den Abbruchstatus wiedergebenden Zustand versetzt (Schritt 50). Das Roboterprogramm steht an de Stelle des früheren Abbruchs. (Schritt 34, 35 in Figur 4) und überprüft nach einem Startsignal, ob alle Fehler bereinigt und quittiert sind (Schritt 36). Es erfolgt eine Zustandsmitteilung an die externen Steuerungen (Schritt 37) und die peripheren Prozesse werden fortgesetzt bzw. neugestartet (Schritt 38). Anschließend kann das Hauptprogramm in dem durch den Spannungsabfall abgebrochenen Ablauf weiterverarbeiten (Schritt 39). Ein beim Abbruch festgestellter Fehler (Fig.2) führt zu einem üblichen Kaltstart (Fig.3).

## Patentansprüche

1. Verfahren zur Behandlung des Spannungsabfalls zumindest im Steuerteil bei einem Roboter mit einer PC-Steuerung aus einer Kombination eines Echtzeit-Betriebssystems zum zeitkritischen Steuern und.Regeln der Roboterbewegung und eines Standard-PC-Betriebssystems zur Kommunikation mit einem Bediener, wobei bei Spannungsabfall ein Batterie-Akku-Betrieb erfolgt, **dadurch gekennzeichnet, dass**
a) eine laufende Roboterbewegung und ggf. Anwendungsarbeiten beendet oder definiert abgebrochen werden,
b) der Roboter entsprechend einer vorgegebenen Bahn abgebremst wird, indem die Steuerung und Regelung des Roboters solange aktiv bleiben, bis noch vorhandene Antriebsenergie verbraucht ist,
c) anschließend Arbeitsprozesse der Steuerung abgeschlossen werden und
d) ausschließlich das Echtzeit-Betriebssystem sowie Robotersteuerungsprogramme betreffende Inhalte des Arbeitsspeichers zum Beendigungszeitpunkt auf zumindest einem Massenspeicher gespeichert werden.

2. Verfahren zum Wiederanfahren eines Roboters nach einem gemäß dem Verfahren nach Anspruch 1 erfolgten Stillsetzen des Roboter, **dadurch gekennzeichnet, dass** das Standard-PC-Betriebssystem in üblicher Weise in den Arbeitsspeicher geladen und gestartet wird und dass die den Zustand des Echtzeit-Betriebssystems sowie der Roboterprogramme im Beendigungszustand betreffenden Inhalte von den/dem Massenspeicher (n) in den Arbeitsspeicher übernommen und die Steuerung des Roboter im Beendigungszustand wieder aufgenommen wird.

3. Verfahren nach Anspruch 1 oder 2, **dadurch gekennzeichnet, dass** die das Echtzeit-Betriebssystem sowie Robotersteuerungsprogramme betreffenden Inhalte des Arbeitsspeichers als Bild (Image) auf dem/den Massenspeicher(n) gespeichert werden.

4. Verfahren nach Anspruch 2 oder 3, **dadurch gekennzeichnet, dass** ein den Zustand des Echtzeit-Betriebssystems sowie der Robotersteuerung enthaltendes Bild (Image) von dem/den-Massenspeicher(n) in den Arbeitsspeicher übernommen wird.

5. Verfahren nach einem der Ansprüche 2 bis 4, **dadurch gekennzeichnet, dass** beim Wiederanfahren auch die Steuerung sonstiger Prozessperipherie im Beendigungszustand wieder aufgenommen wird.

## Claims

1. Method for handling the voltage drop at least in the control unit, in the case of a robot with a PC control of a combination of a real time operating system for time critical control and regulations of the robot movement and a standard PC operating system for communicating with an operator, in which in the case of a voltage drop a battery/accumulator operation takes place,
**characterized in that**
a) a running robot movement and optionally application operations are broken off or stopped in a defined manner,
b) the robot is braked corresponding to a preset path, **in that** the robot control and regulation are active until still existing drive energy is consumed,
c) subsequently working processes of the control are terminated and
d) exclusively contents of the working memory relating to the real time operating system and robot control programs at the termination point are stored in a mass memory.

2. Method for restarting a robot following a stoppage of the robot in accordance with the method of claim 1, **characterized in that**, in the conventional manner, the standard PC operating system is loaded into the working memory and started and that the contents relating to the real time operating system and the robot programs in the termination state are transferred from the mass memory or memories into the working memory and the control of the robot in the termination state is resumed.

3. Method according to one of the claims 1 or 2, **characterized in that** the contents of the working memory relating to the real time operating system and the robot control programs are stored as an image in the mass memory or memories.

4. Method according to claim 2 or 3, **characterized in that** an image containing the state of the real time operating system and the robot programs is transferred from the mass memory or memories into the working memory.

5. Method according to one of the claims 2 to 4, **characterized in that** on restarting also the control of miscellaneous process peripherals is resumed in the termination state.

## Revendications

1. Procédé de gestion de la chute de tension électrique au moins dans la partie de commande pour un robot comprenant une commande par ordinateur personnel PC consistant en une combinaison d'un système d'exploitation en temps réel pour la commande et le réglage temporel critique du mouvement du robot et d'un système d'exploitation de PC standard pour la communication avec un opérateur, dans lequel, en cas de chute de tension électrique, le fonctionnement est assuré par batterie-accumulateur, **caractérisé en ce que**
a) un mouvement du robot en cours et, le cas échéant, des travaux d'application sont terminés ou interrompus de manière définie,
b) le robot est freiné conformément à une trajectoire prédéfinie **en ce que** la commande et le réglage du robot restent activés jusqu'à ce que l'énergie d'entraînement encore disponible soit consommée,
c) des processus de travail de la commande sont ensuite terminés, et
d) seuls des contenus de la mémoire de travail relatifs au système de fonctionnement en temps réel ainsi qu'à des programmes de commande du robot sont stockés dans au moins une mémoire de masse au moment de l'achèvement.

2. Procédé de redémarrage d'un robot après une mise hors service du robot intervenue conformément au procédé selon la revendication 1, **caractérisé en ce que** l'on charge de manière usuelle le système d'exploitation de PC standard dans la mémoire de travail et qu'on le démarre, **en ce que** l'on transfère les contenus relatifs à l'état du système de fonctionnement en temps réel ainsi qu'à celui des programmes du robot dans l'état d'achèvement de la (des) mémoire(s) de masse dans la mémoire de travail, et **en ce que** l'on reprend la commande du robot dans l'état d'achèvement.

3. Procédé selon la revendication 1 ou 2, **caractérisé en ce que** les contenus de la mémoire de travail relatifs au système de fonctionnement en temps réel ainsi qu'à des programmes de commande du robot sont stockés sous forme d'image (Image) dans la (les) mémoire(s) de masse.

4. Procédé selon l'une quelconque des revendications 2 ou 3, **caractérisé en ce qu'**une image (Image) contenant l'état du système de fonctionnement en temps réel ainsi que l'état de la commande du robot est transférée de la (des) mémoire(s) de masse dans la mémoire de travail.

5. Procédé selon l'une quelconque des revendications 2 à 4, **caractérisé en ce que** lors du redémarrage, la commande d'autres périphériques de traitement est reprise dans l'état d'achèvement.
